# EUROPEAN PATENT APPLICATION

(11) **EP 4 763 534 A1**
(43) Date of publication of application: **24.06.2026**
(21) Application number: 24871426.3
(22) Date of filing: 01.07.2024
(51) Int. Cl.: B60C 9/20, B60C 1/00, B60C 9/04, C08K 3/04, C08K 3/013, C08K 3/36, C08K 5/55, C08K 5/098, C08L 7/00, C08L 61/04

(54) **TIRE**

(30) Priority: 25.09.2023 JP 2023159355
(71) Applicant: The Yokohama Rubber Co., Ltd., Hiratsuka-shi, Kanagawa 254-8601 (JP)
(72) Inventor: SHIMIZU, Katsunori, Hiratsuka-shi, Kanagawa 254-8601 (JP)
(74) Representative: Dilg, Haeusler, Schindelmann Patentanwaltsgesellschaft mbH
(86) International application number: PCT/JP2024/023732
(87) International publication number: WO 2025/069622

(57) **Abstract**

A tire of the present invention includes a belt coating rubber and a carcass coating rubber. The belt coating rubber contains a diene rubber containing natural rubber, a filler composed of carbon black and silica, an organic acid cobalt salt, a phenolic resin, and a curing agent in specific amounts, and has a dynamic storage modulus (Belt E') at 20°C of 13 MPa or more. The ratio (Belt E')/(Carcass E') of the dynamic storage modulus (Belt E') of the belt coating rubber at 20°C to a dynamic storage modulus (Carcass E') of the carcass coating rubber at 20°C is 2.5 to 3.5.

## Description

### Technical Field

The present invention relates to a tire and particularly relates to a tire that reduces deterioration of a belt layer due to use for a long period of time and provides excellent durability and steering stability.

### Background Art

A pneumatic tire is mainly composed of a pair of left and right bead portions, sidewall portions, and a tread portion continuous with both sidewall portions. A carcass layer is provided on the inner side of the tire, and both end portions of the carcass layer are folded back from the tire inner side toward the outer side to wrap bead cores. The carcass layer is composed of at least one carcass ply formed by coating carcass cords with a carcass coating rubber.

The tread portion is composed of a cap tread and an undertread, and a belt layer is disposed between the undertread and the carcass layer. The belt layer has at least one belt ply arranged as a tire reinforcing layer. Because a strong impact or a large load is applied to the belt ply, steel cords are used as a reinforcing material and are covered with a belt coating rubber. The belt coating rubber is required to have good adhesiveness to the steel cords.

On the other hand, in recent years, the use period of tires has tended to be longer, and there is a problem in that the adhesiveness between the steel cords and the belt coating rubber decreases along with use for a long period of time, impairing durability. In addition, high steering stability is always required for tires.

With an object of providing a rubber composition that improves the adhesiveness performance with the steel cords, Patent Document 1 below discloses a rubber composition formed by blending a diene rubber containing natural rubber with from 0.3 to 1.5 parts by mass of cobalt borate neodecanoate, from 0.5 to 1.0 part by mass of cobalt stearate, 0.5 parts by mass or more and less than 2.0 parts by mass of a phenolic resin, from 0.5 to 5.0 parts by mass of a curing agent, and from 4.0 to 8.0 parts by mass of sulfur, in which a dynamic storage modulus (E') at a dynamic distortion of 2% and 20°C is 13 MPa or more, a loss tangent (tan δ) at 60°C is 0.20 or less, and the number of repetitions until breakage in a constant strain fatigue test at a strain of 60% and 400 rpm is 35000 or more.

### Citation List

### Patent Literature

Patent Document 1: JP 6288148 B

### Summary of Invention

### Technical Problem

An object of the present invention is to provide a tire that reduces deterioration of a belt layer due to use for a long period of time and provides excellent durability and maintained or improved steering stability.

### Solution to Problem

As a result of diligent research, the inventors of the present invention have found that the above problem can be solved by specifying the composition of a belt coating rubber and determining a ratio of dynamic storage modulus of the belt coating rubber to that of a carcass coating rubber within a specific range, and have completed the present invention.

That is, the present invention provides a tire including:
a belt layer in which a steel cord is coated with a belt coating rubber; and
a carcass ply in which a carcass cord is coated with a carcass coating rubber;
the belt coating rubber containing a diene rubber containing natural rubber, a filler composed of carbon black and silica, an organic acid cobalt salt, a phenolic resin, and a curing agent,
the belt coating rubber containing from 50 to 70 parts by mass of the filler per 100 parts by mass of the diene rubber,
the belt coating rubber containing silica in such an amount that a mass ratio of the silica to the carbon black is 1.0 to 3.5,
the belt coating rubber containing a silane compound represented by Formula (1) below in an amount of 2 to 10 mass% relative to the silica,
the belt coating rubber having a dynamic storage modulus (Belt E') at 20°C of 13 MPa or more, and
a ratio (Belt E')/(Carcass E') of the dynamic storage modulus (Belt E') (MPa) of the belt coating rubber at 20°C to a dynamic storage modulus (Carcass E') (MPa) of the carcass coating rubber at 20°C being 2.5 to 3.5; 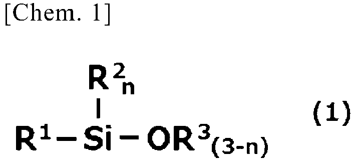
(in Formula (1), R¹ and R² are a hydrocarbon group having 1 to 18 carbons, and R³ is a hydrocarbon group having 1 to 3 carbons or hydrogen; R¹ to R³ optionally contain a heteroatom (with the proviso that sulfur is not contained); and n represents a number of 0 to 2).

### Advantageous Effects of Invention

According to the present invention, there can be provided a tire that reduces deterioration of a belt layer due to use for a long period of time and provides excellent durability and steering stability.

In the tire of the present invention, the composition of the belt coating rubber is specified as described above. This makes it possible to maintain the adhesiveness between the steel cords and the belt coating rubber for a long period of time and to provide excellent durability. In addition, excellent steering stability can also be imparted to the tire by specifying the ratio (Belt E')/(Carcass E') of the dynamic storage modulus (Belt E') (MPa) of the belt coating rubber at 20°C to the dynamic storage modulus (Carcass E') (MPa) of the carcass coating rubber at 20°C to 2.5 to 3.5.

### Description of Embodiments

The present invention will be described in further detail below. First, a belt coating rubber will be described. The belt coating rubber contains a diene rubber containing natural rubber, a filler composed of carbon black and silica, an organic acid cobalt salt, a phenolic resin, and a curing agent.

### Diene Rubber

The diene rubber used for the belt coating rubber contains natural rubber (NR) as an essential component. From the viewpoint of improving the effects of the present invention, the diene rubber preferably contains 80 parts by mass or more of NR per 100 parts by mass of the diene rubber. The NR referred to in the present invention includes isoprene rubber (IR).

In the present invention, as the diene rubber, a rubber other than the NR can be used; examples include butadiene rubber (BR), styrene-butadiene copolymer rubber (SBR), acrylonitrile-butadiene copolymer rubber (NBR), and ethylene-propylene-diene terpolymer (EPDM). These may be used alone or in combination of two or more. Furthermore, the molecular weight and the microstructure are not particularly limited; the diene rubber may be terminal-modified with an amine, amide, silyl, alkoxysilyl, carboxyl, hydroxyl group, or the like, or may be epoxidized.

### Filler

The filler used in the belt coating rubber is composed of carbon black and silica. From the viewpoint of improving the effects of the present invention, the nitrogen adsorption specific surface area (N₂SA) of the carbon black is preferably from 50 to 120 m²/g and more preferably from 70 to 100 m²/g. In addition, from the viewpoint of improving the effects of the present invention, the CTAB specific surface area of the silica is preferably from 100 to 180 m²/g and more preferably from 130 to 170 m²/g. From the viewpoint of the global environment, using a biomass-derived silica is also a preferred embodiment. The biomass-derived silica is commercially available, and examples include Precipitated Silica K160 available from FengHai Rice Biotechnology Co., Ltd.; there is no substantial difference in composition compared with silica other than the biomass-derived silica.

In the present invention, the nitrogen adsorption specific surface area (N₂SA) is a value measured according to JIS K6217-2:2001 "Part 2: Determination of Specific Surface Area - Nitrogen Adsorption Methods - Single-Point Procedures", and the CTAB specific surface area is a value obtained by measuring the amount of n-hexadecyltrimethylammonium bromide adsorbed to the surface of silica according to JIS K6217-3:2001 "Part 3: Determination of Specific Surface Area - CTAB Adsorption Method".

### Organic Acid Cobalt Salt

Examples of the organic acid cobalt salt used in the belt coating rubber include cobalt naphthenate, cobalt neodecanoate, cobalt stearate, cobalt rosinate, cobalt versatate, cobalt tallate, cobalt borate neodecanoate, and cobalt acetylacetonate. Among these, an organic acid cobalt salt containing boron is preferred, and cobalt borate neodecanoate is particularly preferred.

### Phenolic Resin

The belt coating rubber is preferably blended with a phenolic resin to improve the effect.

Examples of the phenolic resin include cresol resins, resorcin resins, alkylphenol resins, and modified phenol resins. Examples of the modified phenol resin include cashew-modified phenol resins, oil-modified phenol resins, epoxy-modified phenol resins, aniline-modified phenol resins, and melamine-modified phenol resins.

### Curing Agent

The belt coating rubber is preferably blended with a curing agent for the phenolic resin.

Examples of the curing agent include hexamethylene tetramine, hexamethoxymethyl melamine (HMMM), hexamethoxymethylol melamine, pentamethoxymethyl melamine, hexaethoxymethyl melamine, polymers of para-formaldehyde, and N-methylol derivatives of melamine. These methylene donors can be used alone or as a discretionary blend.

### Silane Compound

The belt coating rubber contains a silane compound represented by Formula (1) below:

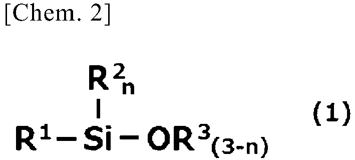

(In Formula (1), R¹ and R² are a hydrocarbon group having 1 to 18 carbons, and R³ is a hydrocarbon group having 1 to 3 carbons or hydrogen; R¹ to R³ may contain a heteroatom (with the proviso that sulfur is not contained); and n represents a number of 0 to 2.)

Using silica in the belt coating rubber leads to a phenomenon in which the storage modulus E' decreases compared with a rubber with the same hardness obtained without using silica; however, using the silane compound represented by Formula (1) above can compensate for the decrease of the storage modulus E'. In addition, storing the belt coating rubber for a certain period of time until tire molding may increase the viscosity and impair tire moldability; however, using the silane compound achieves the effects of reducing the viscosity increase of the rubber during storage and improving the tire moldability.

From the viewpoint of improvement of the present invention, the silane compound represented by Formula (1) above is preferably an alkylalkoxysilane compound in which R¹ and R² are alkyl groups. In this embodiment, n is preferably 0, and R¹ is preferably an alkyl group with 7 to 20 carbons; specific examples include a heptyl group, an octyl group, a nonyl group, a decyl group, an undecyl group, and a dodecyl group, and among these, an alkyl group with 8 to 10 carbons is more preferred from the viewpoint of compatibility with the diene rubber. In addition, in this embodiment, R³ is particularly preferably an ethyl group.

### Compounding Proportion of Belt Coating Rubber

The belt coating rubber contains a diene rubber containing natural rubber, a filler composed of carbon black and silica, an organic acid cobalt salt, a phenolic resin, and a curing agent. The belt coating rubber contains from 50 to 70 parts by mass of the filler per 100 parts by mass of the diene rubber, contains silica in such an amount that the mass ratio of the silica to the carbon black is from 1.0 to 3.5, and contains a silane compound represented by Formula (1) above in an amount of 2 to 10 mass% relative to the silica.

When the content of the filler is less than 50 parts by mass, the steering stability decreases, while if the content is more than 70 parts by mass, the durability of the tire decreases.

When the mass ratio of silica to the carbon black is less than 1.0 or more than 3.5, the durability of the tire decreases.

When the content of the silane compound represented by Formula (1) above is less than 2 mass% relative to the silica, the added amount is too small to achieve the desired effect; while if the content is more than 10 mass%, the viscosity increases and the scorch time is deteriorated during mixing, and the vulcanization properties during aging are deteriorated.

From the viewpoint of improving the effects of the present invention, the content of the filler is preferably from 50 to 70 parts by mass per 100 parts by mass of the diene rubber.

From the viewpoint of improving the effects of the present invention, the mass ratio of the amount of silica to that of the carbon black is preferably from 1.0 to 3.3.

In the filler, the content of the carbon black is preferably from 30 to 50 parts by mass per 100 parts by mass of the diene rubber, and the content of silica is preferably from 30 to 50 parts by mass per 100 parts by mass of the diene rubber.

Furthermore, from the viewpoint of improving the effects of the present invention, the belt coating rubber preferably contains the organic acid cobalt salt in an amount of from 0.1 to 1.5 parts by mass in terms of cobalt, the phenolic resin in an amount of 0.5 parts by mass or more and less than 3.0 parts by mass, and the curing agent in an amount of from 0.5 to 5.0 parts by mass per 100 parts by mass of the diene rubber.

In the tire of the present invention, a dynamic storage modulus (Belt E') of the belt coating rubber at 20°C is 13 MPa or more, and a ratio (Belt E')/(Carcass E') of the dynamic storage modulus (Belt E') (MPa) of the belt coating rubber at 20°C to a dynamic storage modulus (Carcass E') (MPa) of the carcass coating rubber at 20°C is from 2.5 to 3.5.

As described above, excellent steering stability can be imparted to the tire by specifying the ratio (Belt E')/(Carcass E') of the dynamic storage modulus (Belt E') (MPa) of the belt coating rubber at 20°C to the dynamic storage modulus (Carcass E') (MPa) of the carcass coating rubber at 20°C to 2.5 to 3.5.

The dynamic storage modulus is a value (MPa) measured in accordance with JIS K6394 using a viscoelasticity spectrometer available from Toyo Seiki Seisaku-sho, Ltd. under conditions of a static distortion of 10%, a dynamic distortion of ±2%, a frequency of 20 Hz, and a temperature of 20°C.

More preferably, the (Belt E')/(Carcass E') is from 2.7 to 3.3.

In addition, the dynamic storage modulus (Belt E') of the belt coating rubber at 20°C is preferably from 15 to 20 MPa, and the dynamic storage modulus (Carcass E') of the carcass coating rubber at 20°C is preferably from 4 to 8 MPa.

The value of the dynamic storage modulus can be adjusted by changing the type or grade of the filler, changing the amount of sulfur, and/or the like.

In the present invention, the composition of the carcass coating rubber is not particularly limited as long as the (Belt E')/(Carcass E') range can be satisfied; however, for example, NR, BR, and SBR are used as the diene rubber, and from 30 to 50 parts by mass of carbon black is preferably used per 100 parts by mass of the diene rubber. The nitrogen adsorption specific surface area (N₂SA) of the carbon black is preferably from 70 to 100 m²/g.

In addition to the aforementioned components, the belt coating rubber and the carcass coating rubber can also be blended with any of various types of additives that are commonly blended in belt coating rubbers or rubber carcass coating compositions, such as vulcanizing or crosslinking agents; vulcanizing or crosslinking accelerators; anti-aging agents; and plasticizers. Such an additive can be kneaded by a common method to form a composition and used for vulcanization or crosslinking. A blended amount of any of these additives can be a common blended amount in the related art as long as the amount is not inconsistent with the object of the present invention.

The tire of the present invention reduces deterioration of a belt layer due to use for a long period of time and provides excellent durability and steering stability. In addition, the tire of the present invention is preferably a pneumatic tire and can be inflated with air; an inert gas, such as nitrogen; and another gas.

### Examples

The present invention will be further described below by Examples and Comparative Examples, but the present invention is not limited to the following Examples.

### Standard Example 1, Examples 1 to 5, and Comparative Examples 1 to 6 Preparation of Sample

According to the compounding proportion (parts by mass) shown in Table 1, the components other than the vulcanization components (vulcanization accelerator and sulfur) were mixed in a Banbury mixer at 80°C for 5 minutes. The temperature reached at that time was 150°C. Then, the vulcanization components were added and mixed using a roll, thereby obtaining a rubber composition. Each resulting rubber composition (unvulcanized) was press-vulcanized in a mold (15 cm × 15 cm × 0.2 cm) at 170°C for 10 minutes to manufacture a vulcanized rubber test piece, and the following evaluations were performed.

Dynamic storage modulus (E'): The resulting test piece was measured (MPa) in accordance with JIS K6394 using a viscoelasticity spectrometer available from Toyo Seiki Seisaku-sho, Ltd. under conditions of a static distortion of 10%, a dynamic distortion of ±2%, a frequency of 20 Hz, and a temperature of 20°C.

Constant strain fatigue test: A dumbbell-shaped JIS No. 3 test piece was manufactured using the resulting test piece in accordance with JIS K6251 and subjected to a tensile constant strain fatigue test with reference to JIS K6270 under conditions of 20°C, a strain of 100%, and a test frequency of 6.67 Hz (rotation speed 400 rpm), and the number of repetitions until breakage was measured.

Tire steering stability: A test tire was manufactured using the resulting rubber composition for a belt coating rubber and a carcass coating rubber. Each test tire was mounted on a wheel with a rim size of 18 × 8.5 J and mounted on a test vehicle, and sensory evaluations were performed by a test driver on a paved road test course under the condition of air pressure of 240 kPa. The results were expressed as index values on a scale where the measured value of Standard Example 1 was 100. Larger index values indicate superior steering stability.

### Tire durability:

A pneumatic tire (size 295/35R21) was produced by vulcanization molding using the resulting rubber composition for a belt coating rubber and a carcass coating rubber. The resulting tire was mounted on a rim (21 × 10.5 J), inflated with a gas with an oxygen concentration of 100% to an air pressure of 350 kPa, and allowed to stand in an environment at a temperature of 70°C for 14 days. Thereafter, the air pressure was adjusted to 170 kPa, and the tire was mounted on an indoor drum testing machine with a drum diameter of 1707 mm complying with JIS D 4230 to perform a 6000-km running test under conditions of a speed of 60 km/h with the load being increased by 13% every 2 hours from 88% of the load specified by JATMA. After the running test, the tire was disassembled, and the amount (mm) of edge separation in the belt layer was measured.

The results are shown in Table 1.

### [Table 1]

**Table 1**

| | Carcass coating rubber | Standard Example 1 | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|
| NR *1 | 50 | 100 | 100 | 100 | 100 | 100 | 100 | 100 | 100 | 100 | 100 | 100 | 100 |
| BR *2 | 25 | | | | | | | | | | | | |
| SBR *3 | 25 | | | | | | | | | | | | |
| Carbon black 1 *4 | 60 | | | | | | | | | | | | |
| Carbon black 2 *5 | | 60 | 25 | 35 | 25 | 25 | 15 | 15 | 20 | 40 | 25 | 25 | 25 |
| Silica *6 | | | 25 | 35 | 35 | 45 | 50 | 60 | 25 | 20 | 25 | 25 | 25 |
| Filler amount | 60 | 60 | 50 | 70 | 60 | 70 | 65 | 75 | 45 | 60 | 50 | 50 | 50 |
| Silica/carbon black (mass ratio) | | | 1.0 | 1.0 | 1.4 | 1.8 | 3.3 | 4.0 | 1.3 | 0.5 | 1.0 | 1.0 | 1.0 |
| Silane coupling agent *7 | | | 0.8 | 1.1 | 1.1 | 1.4 | 1.7 | 1.8 | 0.8 | 0.6 | 0.8 | 0.8 | 0.8 |
| Silane compound *8 | | | 1.3 | 1.8 | 1.8 | 2.3 | 2.8 | 3.0 | 1.3 | 1.0 | 1.3 | 1.3 | |
| Zinc oxide *9 | 5 | 8 | 8 | 8 | 8 | 8 | 8 | 8 | 8 | 8 | 8 | 8 | 8 |
| Anti-aging agent *10 | 1 | 1 | 1 | 1 | 1 | 1 | 1 | 1 | 1 | 1 | 1 | 1 | 1 |
| Organic acid cobalt salt *11 | | 1 | 1 | 1 | 1 | 1 | 1 | 1 | 1 | 1 | 1 | 1 | 1 |
| Phenolic resin *12 | | 1 | 1 | 1 | 1 | 1 | 1 | 1 | 1 | 1 | 1 | | 1 |
| Curing agent *13 | | 3 | 3 | 3 | 3 | 3 | 3 | 3 | 3 | 3 | 3 | | 3 |
| Sulfur *14 | 2.5 | 6 | 6 | 6 | 6 | 6 | 6 | 6 | 6 | 6 | 3 | 6 | 6 |
| Vulcanization accelerator CZ *15 | 1 | | | | | | | | | | | | |
| Vulcanization accelerator DZ *16 | | 0.7 | 0.7 | 0.7 | 0.7 | 0.7 | 0.7 | 0.7 | 0.7 | 0.7 | 0.7 | 0.7 | 0.7 |
| Vulcanized rubber physical properties | | | | | | | | | | | | | |
| E' (20°C) | 5.8 | 16.4 | 14.5 | 17.5 | 15.1 | 17.4 | 17.2 | 18.5 | 12.1 | 15.7 | 11.3 | 8.3 | 12.8 |
| Constant strain fatigue test | | 13000 | 30000 | 24000 | 28000 | 27000 | 28000 | 14000 | 25000 | 19000 | 21000 | 21000 | 30000 |
| (Belt E')/(Carcass E') | | 2.8 | 2.5 | 3.0 | 2.6 | 3.0 | 3.0 | 3.2 | 2.1 | 2.7 | 1.9 | 1.4 | 2.2 |
| Measurement result | | | | | | | | | | | | | |
| Steering stability | | 100 | 100 | 105 | 100 | 105 | 105 | 105 | 85 | 100 | 95 | 90 | 95 |
| Durability (amount (mm) of edge separation) | | 5 | 2 | 2 | 2 | 2 | 2 | 7 | 5 | 7 | 5 | 5 | 5 |

| | | | | | | | | | | | | | |
|---|---|---|---|---|---|---|---|---|---|---|---|---|---|
| *1: NR (TSR20) *2: BR (Nipol BR1220 available from ZEON CORPORATION) *3: SBR (Nipol 1502 available from ZEON CORPORATION) *4: Carbon black 1 (SEAST V available from Tokai Carbon Co., Ltd., nitrogen adsorption specific surface area (N₂SA) = 27 m²/g) *5: Carbon black 2 (SEAST 300 available from Tokai Carbon Co., Ltd., nitrogen adsorption specific surface area (N₂SA) = 84 m²/g) *6: Silica (Precipitated silica K160 available from FengHai Rice Biotechnology Co., Ltd., CTAB specific surface area = 158 m²/g) *7: Silane coupling agent (Si75 available from Evonic Degussa Corporation) *8: Silane compound (KBE-3083 available from Shin-Etsu Chemical Co., Ltd., octyltriethoxysilane) *9: Zinc oxide (Zinc Oxide III available from Seido Chemical Industry Co., Ltd.) *10: Anti-aging agent (SANTOFLEX 6PPD available from Flexsys) *11: Cobalt borate neodecanoate (NBC-2 available from DIC CORPORATION, cobalt content = 22.2 mass%, shown as the amount of cobalt organic acid in Table 1) *12: Phenolic resin (PENACOLITE RESIN B-18-S available from INDSPEC, resorcin resin) *13: Curing agent (CYREZ964RPC available from CYTEC INDUSTRIES, HMMM) *14: Sulfur (MUCRON OT-20 available from Shikoku Chemicals Corporation) *15: Vulcanization accelerator CZ (NOCCELER CZ-G available from Ouchi Shinko Chemical Industrial Co., Ltd.) *16: Vulcanization accelerator DZ (NOCCELER DZ available from Ouchi Shinko Chemical Industrial Co., Ltd.) | | | | | | | | | | | | | |

The results in Table 1 show that each example can provide a tire that reduces deterioration of a belt layer due to use for a long period of time and provides excellent durability and steering stability compared with the rubber composition of Standard Example 1 because each example includes:
a belt layer in which a steel cord is coated with a belt coating rubber; and
a carcass ply in which a carcass cord is coated with a carcass coating rubber,
the belt coating rubber containing a diene rubber containing natural rubber, a filler composed of carbon black and silica, an organic acid cobalt salt, a phenolic resin, and a curing agent,
the belt coating rubber containing from 50 to 70 parts by mass of the filler per 100 parts by mass of the diene rubber,
the belt coating rubber containing silica in such an amount that the mass ratio of the silica to the carbon black (silica/carbon black ratio) is 1.0 to 3.5,
the belt coating rubber containing a silane compound represented by Formula (1) above in an amount of 2 to 10 mass% relative to the silica,
the belt coating rubber having a dynamic storage modulus (Belt E') at 20°C of 13 MPa or more, and
a ratio (Belt E')/(Carcass E') of the dynamic storage modulus (Belt E') (MPa) of the belt coating rubber at 20°C to a dynamic storage modulus (Carcass E') (MPa) of the carcass coating rubber at 20°C being 2.5 to 3.5.

In contrast, Comparative Example 1 had a content of the filler more than the upper limit specified in the present invention and a silica/carbon black ratio more than the upper limit specified in the present invention and thus resulted in poor tire durability.

Comparative Example 2 had a content of the filler less than the lower limit specified in the present invention and (Belt E')/(Carcass E') also less than the lower limit specified in the present invention, and thus resulted in poor tire steering stability.

Comparative Example 3 had a silica/carbon black ratio less than the lower limit specified in the present invention and thus resulted in poor tire durability.

Comparative Example 4 had a dynamic storage modulus (Belt E') of the belt coating rubber at 20°C of less than the lower limit specified in the present invention and (Belt E')/(Carcass E') also less than the lower limit specified in the present invention, and thus resulted in poor tire steering stability.

Comparative Example 5 was not blended with the phenolic resin and the curing agent, had a dynamic storage modulus (Belt E') of less than the lower limit specified in the present invention and (Belt E')/(Carcass E') also less than the lower limit specified in the present invention, and thus resulted in poor tire steering stability.

Comparative Example 6 had a dynamic storage modulus (Belt E') of the belt coating rubber at 20°C of less than the lower limit specified in the present invention and (Belt E')/(Carcass E') also less than the lower limit specified in the present invention, and thus resulted in poor tire steering stability.

The present invention includes the following embodiments:

### Embodiment 1:

A tire including:
a belt layer in which a steel cord is coated with a belt coating rubber; and
a carcass ply in which a carcass cord is coated with a carcass coating rubber;
the belt coating rubber containing a diene rubber containing natural rubber, a filler composed of carbon black and silica, an organic acid cobalt salt, a phenolic resin, and a curing agent,
the belt coating rubber containing from 50 to 70 parts by mass of the filler per 100 parts by mass of the diene rubber,
the belt coating rubber containing silica in such an amount that a mass ratio of the silica to the carbon black is 1.0 to 3.5,
the belt coating rubber containing a silane compound represented by Formula (1) below in an amount of 2 to 10 mass% relative to the silica,
the belt coating rubber having a dynamic storage modulus (Belt E') at 20°C of 13 MPa or more, and
a ratio (Belt E')/(Carcass E') of the dynamic storage modulus (Belt E') (MPa) of the belt coating rubber at 20°C to a dynamic storage modulus (Carcass E') (MPa) of the carcass coating rubber at 20°C being 2.5 to 3.5; 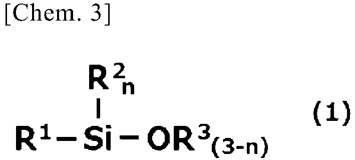
(in Formula (1), R¹ and R² are a hydrocarbon group having 1 to 18 carbons, and R³ is a hydrocarbon group having 1 to 3 carbons or hydrogen; R¹ to R³ optionally contain a heteroatom (with the proviso that sulfur is not contained); and n represents a number of 0 to 2).

### Embodiment 2:

The rubber composition for a tire according to embodiment 1, wherein the carbon black has a nitrogen adsorption specific surface area (N₂SA) of from 50 to 120 m²/g, and the silica has a CTAB specific surface area of from 100 to 170 m²/g.

### Embodiment 3:

The tire according to embodiment 1 or 2, wherein the carbon black has a nitrogen adsorption specific surface area (N₂SA) of from 70 to 100 m²/g, and the silica has a CTAB specific surface area of from 130 to 170 m²/g.

### Embodiment 4:

The rubber composition for a tire according to any of embodiments 1 to 3, wherein the silica is a biomass-derived silica.

### Embodiment 5:

The tire according to any of embodiments 1 to 4, wherein the belt coating rubber contains the organic acid cobalt salt in an amount of from 0.3 to 1.5 parts by mass in terms of cobalt, the phenolic resin in an amount of 0.5 parts by mass or more and less than 3.0 parts by mass, and the curing agent in an amount of from 0.5 to 5.0 parts by mass per 100 parts by mass of the diene rubber.

### Embodiment 6:

The tire according to any of embodiments 1 to 5, wherein the organic acid cobalt salt is cobalt borate neodecanoate.

### Embodiment 7:

The tire according to any of embodiments 1 to 6, wherein a proportion of the natural rubber is 80 parts by mass or more per 100 parts by mass of the diene rubber.

### Embodiment 8:

The tire according to any of embodiments 1 to 7, wherein the (Belt E')/(Carcass E') is from 2.7 to 3.3.

### Embodiment 9:

The tire according to any of embodiments 1 to 8, wherein, in the silane compound represented by Formula (1), n is 0, R¹ is an alkyl group having 7 to 20 carbons, and R³ is an ethyl group.

## Claims

1. A tire comprising:
a belt layer in which a steel cord is coated with a belt coating rubber;
and
a carcass ply in which a carcass cord is coated with a carcass coating rubber;
the belt coating rubber comprising a diene rubber comprising natural rubber, a filler comprising carbon black and silica, an organic acid cobalt salt, a phenolic resin, and a curing agent,
the belt coating rubber comprising from 50 to 70 parts by mass of the filler per 100 parts by mass of the diene rubber,
the belt coating rubber comprising silica in such an amount that a mass ratio of the silica to the carbon black is 1.0 to 3.5,
the belt coating rubber comprising a silane compound represented by Formula (1) below in an amount of 2 to 10 mass% relative to the silica,
the belt coating rubber having a dynamic storage modulus (Belt E') at 20°C of 13 MPa or more, and
a ratio (Belt E')/(Carcass E') of the dynamic storage modulus (Belt E') (MPa) of the belt coating rubber at 20°C to a dynamic storage modulus (Carcass E') (MPa) of the carcass coating rubber at 20°C being 2.5 to 3.5; 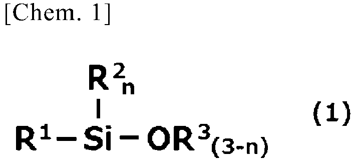
(in Formula (1), R¹ and R² are a hydrocarbon group having 1 to 18 carbons, and R³ is a hydrocarbon group having 1 to 3 carbons or hydrogen; R¹ to R³ optionally comprise a heteroatom (with the proviso that sulfur is not contained); and n represents a number of 0 to 2).

2. The tire according to claim 1, wherein the carbon black has a nitrogen adsorption specific surface area (N₂SA) of from 50 to 120 m²/g, and the silica has a CTAB specific surface area of from 100 to 170 m²/g.

3. The tire according to claim 1, wherein the carbon black has a nitrogen adsorption specific surface area (N₂SA) of from 70 to 100 m²/g, and the silica has a CTAB specific surface area of from 130 to 170 m²/g.

4. The tire according to claim 1, wherein the silica is a biomass-derived silica.

5. The tire according to claim 1, wherein the belt coating rubber comprises the organic acid cobalt salt in an amount of from 0.1 to 1.5 parts by mass in terms of cobalt, the phenolic resin in an amount of 0.5 parts by mass or more and less than 3.0 parts by mass, and the curing agent in an amount of from 0.5 to 5.0 parts by mass per 100 parts by mass of the diene rubber.

6. The tire according to claim 1, wherein the organic acid cobalt salt is cobalt borate neodecanoate.

7. The tire according to claim 1, wherein a proportion of the natural rubber is 80 parts by mass or more per 100 parts by mass of the diene rubber.

8. The tire according to claim 1, wherein the (Belt E')/(Carcass E') is from 2.7 to 3.3.

9. The tire according to claim 1, wherein, in the silane compound represented by Formula (1), n is 0, R¹ is an alkyl group having 7 to 20 carbons, and R³ is an ethyl group.
